# EUROPEAN PATENT SPECIFICATION

(11) **EP 1 712 328 B1**
(45) Date of publication and mention of the grant of the patent: **10.09.2008**
(21) Application number: 04801644.8
(22) Date of filing: 03.12.2004
(51) Int. Cl.: B23Q 7/14

(54) **PALLET REPLACING DEVICE**
PALETTENAUSTAUSCHVORRICHTUNG
DISPOSITIF DE REMPLACEMENT DE PALETTE

(30) Priority: 04.12.2003 JP 2003406153
(43) Date of publication of application: 18.10.2006
(73) Proprietor: MAKINO MILLING MACHINE CO. LTD., Meguro-ku, Tokyo 152-8578 (JP)
(72) Inventor: KIKUCHI, Noriyuki, MAKINO MILLING MACHINE CO, LTD, Aiko-gun, Kanagawa 243-0303 (JP)
(74) Representative: Becker, Eberhard
(86) International application number: PCT/JP2004/018420
(87) International publication number: WO 2005/053900

(56) References cited:
- JP-A- 4 057 635
- JP-A- 2000 167 741
- JP-A- 2002 137 138

## Description

### TECHNICAL FIELD

The present invention relates to a pallet changer for changing a pallet held in a vertical position on a vertical surface, of a table or a pallet mount of a machine tool, on which the pallet is removably mounted according to the preamble of claim 1, as for example known from JP-A-2000 167741.

### BACKGROUND ART

A machine tool in which a pallet having a workpiece fixed thereon is mounted removably on the table or the pallet mount of a machine tool to machine the workpiece is widely used. In such a machine tool, a pallet changer is used to replace a machined workpiece with a workpiece yet to be machined. In the conventional pallet changer, new and old pallets are placed on arms extending in opposite horizontal directions on both sides of a rotary shaft extending vertically, and the pallets are replaced by rotating the rotary shaft by 180 degrees and thus exchanging the positions of the new and old pallets.

The pallet changer described above is configured to support the pallets in a horizontal position. However, a pallet changer supporting the pallets in a vertical position is also available.

International Publication WO01/94071, for example, discloses a pallet mount arranged to face the forward end of a spindle and adapted to be rotatable about a horizontal axis. This pallet mount includes two pallet mounting surfaces back-to-back and, by rotating the pallet mount by 180 degrees about a horizontal axis, new and old pallets can be exchanged.

US Patent No. 5,172,464 discloses a pallet magazine in which a plurality of pallet holders are disposed, adjacent to a machine tool, radially and at equal angular intervals about a rotary shaft extending in horizontal direction, and a pallet for fixing a workpiece thereon is mounted on each pallet holder. One of the pallets supported vertically in this pallet magazine is exchanged with a pallet mounted on a vertical table of the machine tool.

However, International Publication WO01/94071 and US Patent No. 5,172,464 do not disclose a pallet changer in which pallets are mounted in a vertical position on the two side surfaces of a pallet-supporting member rotatable about a vertical axis.

### DISCLOSURE OF THE INVENTION

The conventional pallet changer for holding the pallets in a horizontal position on arms rotatable about a vertical axis or the pallet changers disclosed in International Publication WO01/94071 and US Patent No. 5172464 pose a problem that the pallet for a large tabular workpiece is large and a large area is required to exchange the pallet, resulting in a large floor space required to install a pallet changer.

The technical subject of the present invention is to solve the above-mentioned problem of the prior art, and the object thereof is to reduce the floor space of a pallet changer for changing a pallet on which a large tabular workpiece can be mounted.

In order to achieve this object, according to the present invention, there is provided a pallet changer for changing a pallet of a machine tool, which machine tool includes a spindle supported so as to be rotatable about a horizontal axis for mounting a tool at the forward end thereof, and a table or a pallet mount facing the front of the spindle for mounting a pallet on a vertical surface perpendicular to the axis of the spindle, and which machine tool machines a workpiece fixed on the pallet with the tool by moving the tool and the table relative to each other. The pallet changer is characterized by including a pallet support member disposed adjacent to the table or the pallet mount and adapted to be able to be rotationally indexed about a vertical axis, said pallet support member having at least two vertical pallet mounting surfaces on each of which the pallet can be removably mounted; and a pallet moving means for moving and transferring the pallet in a vertical position between the table or the pallet mount and the pallet support member.

The pallet in a vertical position is moved and transferred between the table or the pallet mount and the pallet support member, and the pallet support member is rotated about the vertical axis so that a new pallet is indexed at the pallet change position. Thus, the new pallet in a vertical position is moved to the table or the pallet mount where it is transferred. As the pallets are moved and rotated in a vertical position, the floor space required for the pallet change operation is reduced.

Also, there is provided a pallet changer wherein the pallet support member is arranged as an extension of the table or the pallet mount in the horizontal direction perpendicular to the spindle axis and wherein the pallet mounting surface on the side of the pallet support member where the pallet moves is arranged in parallel to the pallet mounting surface of the table or the pallet mount.

The pallet support member is arranged at a position in the extension of the table in the horizontal direction perpendicular to the spindle axis, and therefore the pallet moves only linearly. This configuration also makes it possible to reduce the floor space required for the pallet change operation.

According to the present invention, the pallets are moved and replaced in a vertical position between the pallet mounting surface formed to extend vertically on the table or the pallet mount of a machine tool and the pallet mounting surface formed to extend vertically on the pallet changer. Therefore, the installation space for the pallet changer can be remarkably reduced.

### BRIEF DESCRIPTION OF THE DRAWINGS

Fig. 1 is a perspective view showing a pallet changer according to a preferred embodiment of the present invention together with a machine tool;
Fig. 2 is a perspective view of the table of the machine tool shown in Fig. 1;
Fig. 3 is a perspective view of a pallet;
Fig. 4 is a sectional view showing the pallet clamped on the table;
Fig. 5 is a sectional view showing the pallet unclamped from the table;
Fig. 6 is a plan view of the pallet changer;
Fig. 7 is a perspective view showing the pallet changer together with the machine tool for explaining the pallet change operation;
Fig. 8 is another perspective view showing the pallet changer together with the machine tool for explaining the pallet change operation; and
Fig. 9 is another perspective view showing the pallet changer together with the machine tool for explaining the pallet change operation.

### BEST MODE FOR CARRYING OUT THE INVENTION

Preferred embodiments of the present invention will be described below with reference to the accompanying drawings.

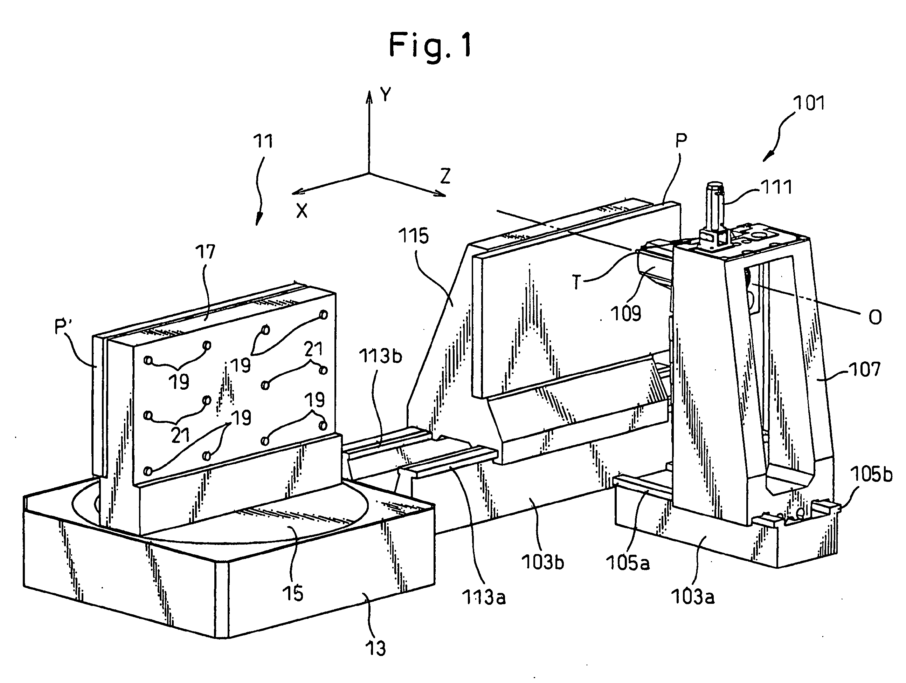

First, referring to Fig. 1, a pallet changer 11 according to a preferred embodiment of the present invention is arranged adjacent to a machine tool 101 to exchange new and old pallets P and P' while they are kept in a vertical position. The machine tool 101 includes, as main components, first and second beds 103a, 103b, a column 107 disposed on the first bed 103a, a spindle head 109 disposed on the column 107 for rotatably supporting a spindle (not shown), and a table 115 disposed on the second bed 103b.

Z-axis guide rails 105a, 105b are disposed on the upper surface of the first bed 103a to extend in parallel to a rotational axis O of the spindle. The column 107 is adapted to move reciprocably along the Z-axis guide rails 105a, 105b. Also, the machine tool 101 has, as a Z-axis feed means, a threaded shaft (not shown) extending along Z-axis in the first bed 103a, a servo motor (not shown) connected to one end of the threaded shaft and a nut (not shown) disposed at the lower end of the column 107 so as to be engaged with the threaded shaft.

The spindle is supported by the spindle head 109 so as to be rotatable about the horizontal rotational axis O and to be projected in the Z-axis direction from the front surface of the column 107. A tool T is mounted on the forward end of the spindle through a well-known tool mounting means such as a tool holder (not shown) and a draw bar (not shown). A pair of parallel Y-axis guide rails disposed on the front surface (not shown) of the column 107 to extend vertically (along Y-axis direction). The spindle head 109 is mounted on the column 107 so as to move reciprocably along the Y-axis guide rails. Also, the machine tool 101 includes, as a Y-axis feed means, a threaded shaft (not shown) disposed in the column 107 to extend in the Y-axis direction, a servo motor 111 connected to one end of the threaded shaft, and a nut (not shown) disposed on the spindle head 109 so as to be engaged with the threaded shaft.

In this embodiment, the second bed 103b makes up a member separate from the first bed 103a, and is arranged in spaced relation with the first bed 103a in front of the latter, i.e. near the forward end of the spindle. A pair of X-axis guide rails 113a, 113b are disposed on the upper surface of the second bed 103b to extend in parallel to each other along X-axis perpendicular to Y-and Z-axes. The table 115 is adapted to move reciprocably along the X-axis guide rails 113a, 113b. The machine tool 101 also includes, as an X-axis feed means, a threaded shaft (not shown) disposed in the second bed 103b to extend in the X-axis direction, a servo motor (not shown) connected to one end of the threaded shaft, and a nut (not shown) disposed on the table 115 so as to be engaged with the threaded shaft. In this way, the machine tool 101 machines a workpiece (not shown) on the pallet P mounted on the table 115 while moving the workpiece and the tool T relatively to each other in the directions along three orthogonal axes by the X-, Y- and Z-axis feed means.

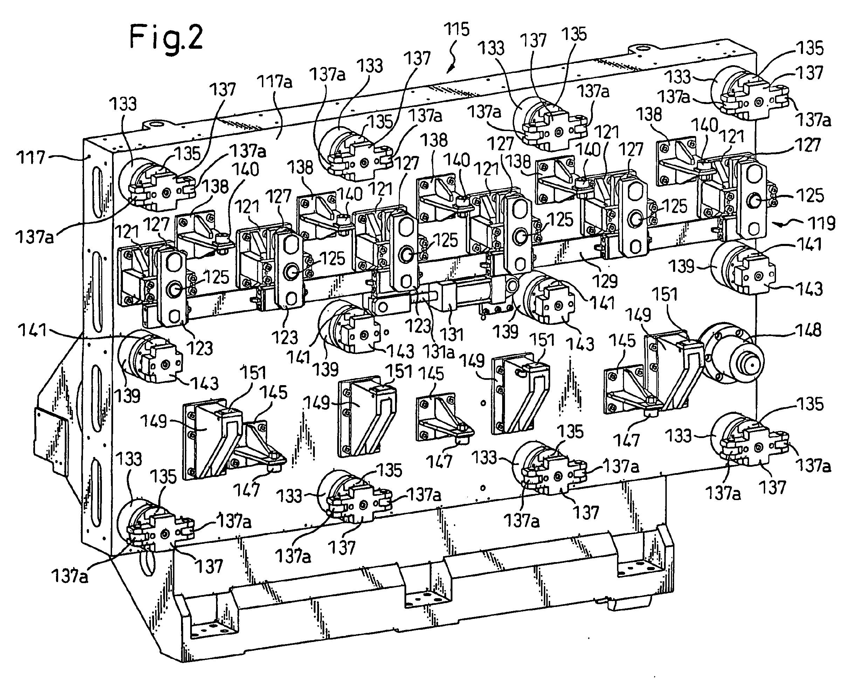

Next, with reference to Figs. 2 to 4, the configuration of the table 115 and the pallet P (P') will be explained. The pallets P and P' have the same configuration, and therefore only the pallet P will be described below.

In Fig. 2, the table 115 is formed of a member which has a substantially triangular cross section as a whole and which is provided with a plate member 117 having a vertical pallet mounting surface 117a facing the forward end of the spindle. The pallet mounting surface 117a has disposed thereon a lift means 119 for vertically moving the pallet P along the pallet mounting surface 117a, a guide means for guiding the pallet P in the X-axis direction along the pallet mounting surface 117a, a support means for supporting the pallet P in Y- and Z-axis directions on the pallet mounting surface 117a, and a clamp means for fixing the pallet P on the pallet mounting surface 117a. Further, the pallet mounting surface 117a has disposed thereon an engaging protrusion 148 making up an X-axis positioning means for positioning the pallet P along X-axis on the pallet mounting surface 117a.

The lift means 119 includes a plurality of brackets 121 spaced apart from each other in the X-axis direction along the pallet mounting surface 117a, a plurality of link members 123 adapted to be rotatable about the rotary shafts 125 mounted on the brackets 121 and extending in the Z-axis direction, a plurality of lift rollers 127 each mounted at the upper end of each link member 123 so as to be rotatable about the rotary shaft extending in the Z-axis direction, a connecting member 129 connected to the lower ends of the link members 123 and extending in the X-axis direction, and a lift cylinder 131 constituted by a fluid cylinder or preferably a pneumatic cylinder having a piston rod 131a connected to the connecting member 129 to be movable in the X-axis direction. In the lift means 119, this configuration allows each lift roller 127 to be moved vertically, depending on the position of the piston rod 131a, between a lift position shown in Fig. 2 and a support position where the link member 123 is rotated counterclockwise by a predetermined angle from the position shown in Fig. 2. The lift rollers 127 make up a part of the lift means 119 and a part of the guide means described later.

The guide means, in addition to the lift rollers 127, includes first horizontal guide rollers 137a and second horizontal guide rollers 140, 147. The first guide rollers 137a are supported on a plurality of movable clamp members 137 disposed along the upper and lower edges of the pallet mounting surface 117a and spaced apart from each other in the X-axis direction so as to be rotatable about rotary shafts extending in the Y-axis direction. The second horizontal guide rollers 140, 147 are supported on a plurality of brackets 138 disposed below the upper movable clamp members 137 along the pallet mount surface 117a and spaced apart from each other in the X-axis direction on one hand and on a plurality of brackets 145 disposed above the lower movable clamp members 137 along the pallet mounting surface 117a and spaced apart from each other in the X-axis direction on the other hand, so as to be rotatable about rotary shafts extending in the Y-axis direction. The movable clamp members 137 make up a part of the guide means and an essential part of the clamp means described later.

The support means includes a plurality of first and second horizontal support members 133, 139 mounted on the pallet mounting surface 117a and a plurality of vertical support members 149. The first horizontal support members 133 are arranged along the upper and lower edges of the pallet mounting surface 117a and are spaced apart from each other in the X-axis direction, while the second horizontal support member 139 are arranged substantially along the center line of the pallet mounting surface 117a and are spaced apart from each other in the X-axis direction. The first and second horizontal support members 133, 139 have first and second horizontal support surfaces 135, 141, respectively, formed to extend vertically in opposed relation to the pallet P mounted on the pallet mounting surface 117a. The vertical support members 149 are arranged below the second horizontal support members 139, are spaced apart from each other in the X-axis direction and each has a vertical support surface 151 facing upward and formed to extend horizontally.

The clamp means includes a movable clamp member 137, an unclamp cylinder (not shown) constituted by a fluid cylinder, preferably a pneumatic cylinder (not shown), for separating the movable clamp member 137 in the Z-axis direction from the pallet mounting surface 117a, a clamp spring 133a (Figs, 4, 5) serving as an urging means for urging the movable clamp member 137 toward the pallet mounting surface 117a, and a stationary clamp member 143 fixed on the horizontal support member 139. In this embodiment, the unclamp cylinder is built into the first support member 133.

In the case where the pallets P, P' and the workpiece are relatively light in weight, the pallets may be supported directly on the lift rollers 127 serving as the guide means without any lift means and any vertical support means.

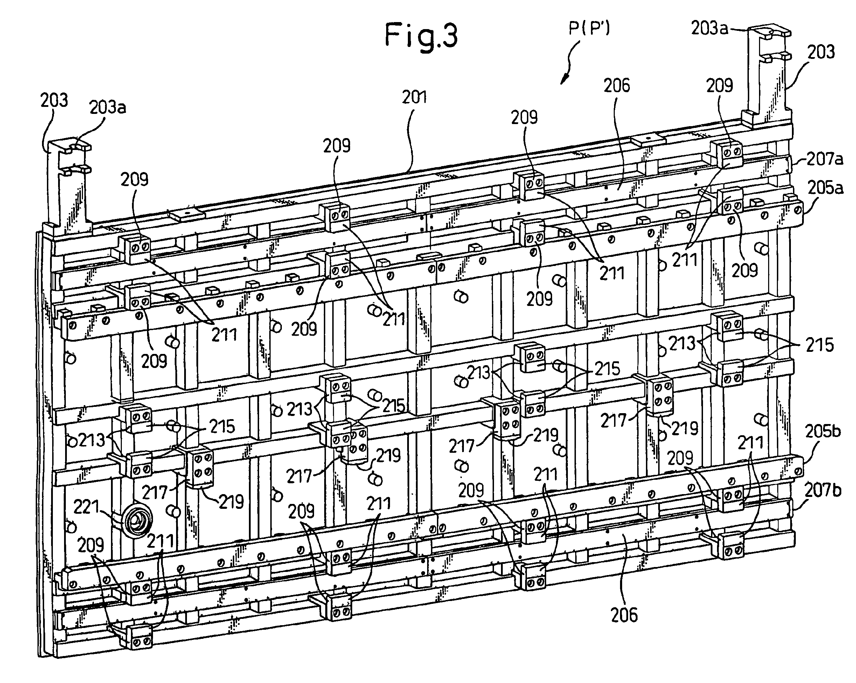

Next, referring to Fig. 3, the pallet P includes a plate member 201 having a workpiece mounting surface 201a for mounting a workpiece (not shown) thereon. When the pallet P is mounted on the pallet mounting surface 117a, the workpiece mounting surface 201a forms a vertical surface opposed to the forward end of the spindle. The surface of the plate member 201 opposite to the workpiece mounting surface 117a thereof constitutes a table surface 201b facing the pallet mounting surface 117a of the table 115. The table surface 201b has disposed thereon a guide means for guiding the pallet P along the pallet mounting surface 117a in cooperation with the guide means of the table 115 and a bearing means in contact with the support means. The table surface 201b has further arranged thereon a fitting portion 221 serving as a positioning means adapted to engage the engaging protrusion 148 of the table 115 for positioning the pallet P in the X-axis direction on the pallet mounting surface 117a.

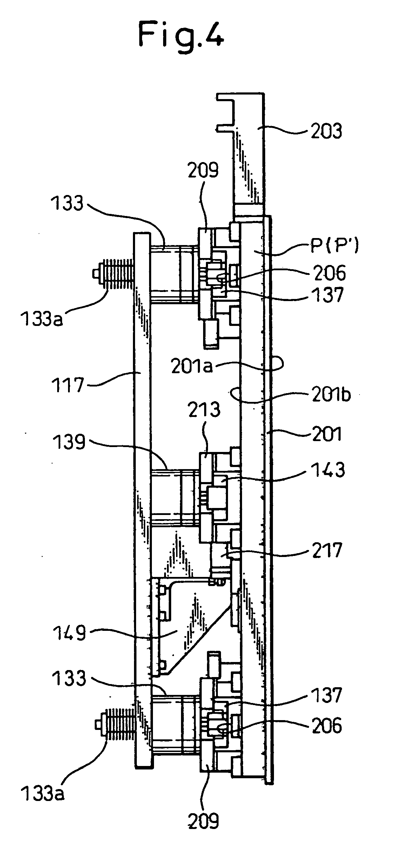

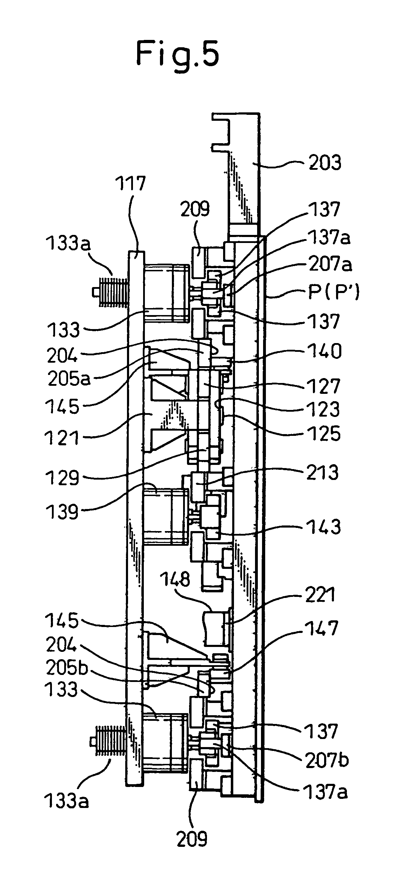

The guide means of the pallet P includes a pair of first guide rails 207a, 207b extending in parallel with each other along the upper and lower edges of the table surface 201b, and a pair of second guide rails 205a, 205b extending in parallel with the first guide rails 207a, 207b, respectively. Each of the first guide rails 207a, 207b has a first guide surface 206 adapted to contact the first horizontal guide roller 137a when the pallet P is mounted on the pallet mounting surface 117 (see Figs. 4 and 5). Each of the second guide rails 205a, 205b has a second guide surface 204 adapted to contact the second horizontal guide rollers 140, 147 when the pallet P is mounted on the pallet mounting surface 117. Referring to Figs. 3 to 5, it will be understood that the first and second guide surfaces 206, 204 are formed to face in opposite directions along the Z-axis. When the lift means 119 is in the lift position shown in Fig. 2, the lift rollers 127 are each in contact with the lower end surface of the second guide rail 205a, of the first and second guide rails 205a, 205b, arranged on the upper side when the pallet P is mounted on the pallet mounting surface 117 (see Fig. 5).

The bearing means includes a plurality of first horizontal bearing members 209, a plurality of second horizontal bearing members 213 and a plurality of vertical bearing members 217, which are mounted on the table surface 201b of the pallet P. The first horizontal bearing members 209 are disposed on both sides of the first guide rails 207a, 207b and spaced apart from each other in the X-axis direction, and each of them has a first horizontal bearing surface 211 adapted to contact the first horizontal support surface 135 of the first horizontal support member 133 when the pallet P is mounted on the pallet mounting surface 117 (see Figs. 4 and 5). The second horizontal bearing members 213 are disposed on both sides of substantially the center line of the pallet P in the X-axis direction and spaced apart from each other in the X-axis direction, and each of them has a second horizontal bearing surface 213 adapted to contact the second vertical support surface 141 of the second horizontal support member 139 when the pallet P is mounted on the pallet mounting surface 117 (see Figs. 4 and 5). The vertical bearing members 217 are disposed in the vicinity of the second horizontal support members 139 and each of them has a vertical bearing surface 219 adapted to contact the vertical support surface 151 of the vertical support member 149. Each first horizontal bearing member 209 is also held or clamped between the movable clamp member 137 and the first horizontal support member 133 (see Fig. 5).

The embodiment having the pallet mounting surface 117a perpendicular to the table 115 has been described above. However, as an alternative, a pallet mount having a vertical pallet mounting surface may be fixedly erected on the horizontal upper surface of the table, and various members for mounting and demounting the pallet described in Fig. 2 may be arranged on the pallet mount.

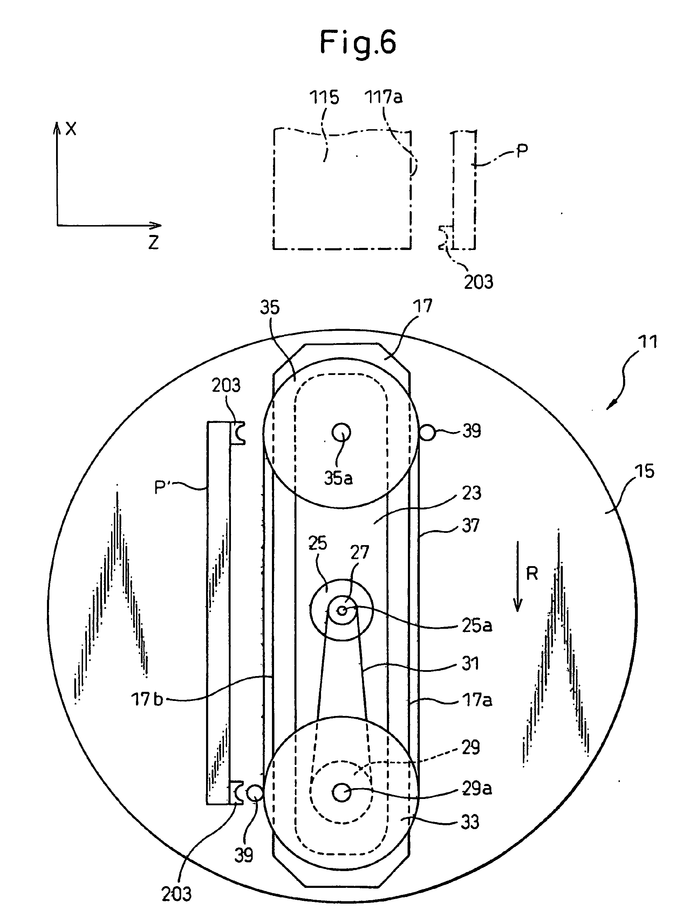

Next, referring to Figs 1 and 6, the pallet changer 11 includes, as main components, a bed 13 making up a base, a swivel base 15 disposed on the bed 13 so as to be rotatable about the vertical axis, and a pallet support member 17 formed of a tabular member erected on the swivel base 15 for removably mounting one pallet on each side surface thereof. The side surfaces of the pallet support member 17 constitute pallet mounting surfaces 17a, 17b. The pallet mounting surfaces 17a, 17b have disposed thereon such devices as a lift means 119, a guide means, a support means, a positioning means and a clamp means of the table 115, which are illustrated by reference numerals 19, 21 in Fig. 1. Also, in Fig. 1, the pallet support member 17 has mounted thereon a new pallet P' carrying a workpiece yet to be machined (not shown), and the table 115 has mounted thereon an old pallet P carrying a workpiece in process (not shown) or a workpiece already machined (not shown).

The pallet changer 11 further includes a pallet moving means for moving and transferring the pallets P, P' between the pallet support member 17 and the table 115. Referring to Fig. 6, the pallet moving means includes a tabular movable base member 23 disposed at the top of the pallet support member 17 and a chain drive means disposed on the movable base member 23 and adapted to move together with the movable base member 23. The movable base member 23 is movable in the X- and Z-axis directions on the pallet support member 17 by a base drive mechanism not shown. The chain drive means includes a drive motor 25 having an output shaft 25a extending in the Y-axis direction, a driving sprocket 27 mounted on the output shaft 25a of the drive motor 25, a driven sprocket 29 mounted on the rotary shaft 29a extending in parallel to the output shaft 25a of the drive motor 25, a drive chain 31 extending between the driving sprocket 27 and the driven sprocket 29, a first sprocket 33 mounted on the rotary shaft 29a concentrically with the driven sprocket 29, a second sprocket 35 mounted on a rotary shaft 35a disposed on the opposite side of the output shaft 25a of the drive motor 25 and extending in the Y-axis direction, a driven chain 37 extending between the first and second sprockets 33, 35 and adapted to move around the first and second sprockets 33, 35 in the X-Z plane, and an engaging portion 39 mounted on the driven chain 37 and adapted to engage with the engaging portion 203 of the pallets P, P'.

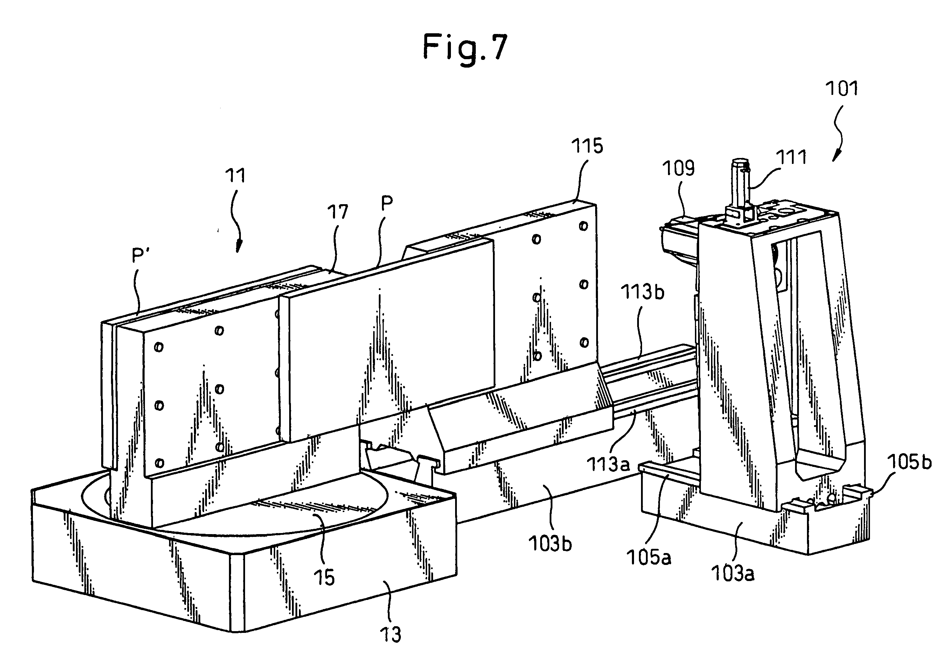

Referring to Figs. 7 to 9, the operation of this embodiment will be explained below. In the following description, the pallet-changing process is executed from the state in which the workpiece (not shown) fixed on the pallet P mounted on the table 115 has been completely machined (Fig. 1).

Once the workpiece is completely machined in Fig. 1, the machine tool 101 starts the pallet change operation. Specifically, first, the X-axis feed means is activated, so that the table 115 moves along the X-axis guide rails 113a, 113b toward the pallet change position where the pallets P, P' are exchanged between the table 115 and the pallet changer 11, i.e. the X-axis stroke end where the table 115 is positioned nearest to the pallet changer 11. Then, the table 115 is set in position. When the table 115 arrives at the pallet change position, the pallet unclamp operation described later is started.

Specifically, in Figs. 2 and 5, an unclamp cylinder (not shown) is supplied with a working fluid, so that the movable clamp member 137 moves toward the pallet P in the X-axis direction against the urging force of the clamp spring 113a. As a result, the first and second horizontal bearing members 209, 213 thus far held between the movable clamp member 137 and the first horizontal support member 133 and between the stationary clamp member 143 and the second horizontal support member 139 can now be moved freely. When the movable clamp member 137 further advances and comes into contact with the pallet P, the pallet P is urged in a direction (rightward in Fig. 5) away from the table 115 by the movable clamp member 137.

As soon as or after the movable clamp member 137 begins to move, the working fluid is supplied to the lift cylinder 131 so that the piston rod 131a extends. As a result, the connecting member 129 moves leftward in Fig. 2, and the link member 123 rotates clockwise from the support position to the lift position shown in Fig. 2. Then, the lift rollers 127 of the lift means 119 come into contact with the lower end surface of the upper guide rail 205a of the second guide rail pair, so that the pallet 117 moves up and is held in a vertical position by the lift rollers 127. In this way, the vertical bearing surfaces 219 of the vertical bearing members 217 move away from the vertical support surfaces 151 of the vertical support members 149, so that the pallet P becomes movable in the horizontal direction.

The pallet P, after becoming movable in the horizontal direction, is urged by the movable clamp members 137 away from the pallet mounting surface 117a of the table 115, and the fitting portion 221 moves away from the engaging protrusion 148, thereby disengaging them from each other. Also, as the result of the pallet P being urged by the movable clamp members 137, the first horizontal guide rollers 137a are pressed against the first guide surfaces 206, while at the same time the second horizontal guide rollers 140, 147 are pressed against the second guide surfaces 204. In this way, the pallet P is subjected to the same magnitude of pressure in opposite directions between the first horizontal guide rollers 137a and the first guide rails 207a, 207b and between the second horizontal guide rollers 140, 147 and the second guide rails 207a, 207b, with the result that the pallet P can be held so as to be movable in the X-axis direction but immovable in the Z-axis direction.

As soon as or after the pallet change operation of the machine tool 101 is started, a pallet change command is sent out from a machine control unit to the pallet changer 11. Upon receipt of the pallet change command, the pallet changer 11 rotates the swivel base 15 to position the pallet support member 17 so that one pallet mounting surface 17a of the pallet mounting surfaces 17a, 17b thereof having no pallet P or P' mounted thereon becomes parallel to the pallet mounting surface 117a of the table 115, i.e. the pallet mounting surface 17a is laid in the X-Y plane (see Fig. 6).

Next, the movable base member 23 begins to move toward the table 115 in the X-axis direction. When the engaging member 39 arrives at a position where it can engage with the engaging portion 203 of the old pallet P mounted on the table 115, the movable base member 23 comes to stop and moves toward the old pallet in the Z-axis, so that the engaging member 39 comes to engage the engaging recess 203a of the engaging portion 203. Then, the movable base member 23 is retreated in the X-axis direction, while at the same time the drive motor 25 rotates clockwise in Fig. 6. As a result, the driven chain 37 is rotated in the direction of arrow R, so that the old pallet P is pulled from the pallet mounting surface 117a of the table 115 (see Fig. 7) and moves to the pallet mounting surface 17a of the pallet support member 17. As already described, the pallet mounting surface 17a has a similar configuration to the pallet mounting surface 117a of the table 115, and the pallet P that has moved onto the pallet mounting surface 17a of the pallet support member 17 is guided to and fixed at a predetermined position on the pallet mounting surface 17a by the clamp operation similar to that of the table 115 as described later. When the pallet P is fixed on the pallet mounting surface 17a, the movable base member 23 moves away from the pallet P in the Z-axis direction, to thereby disengage the engaging member 39 and the engaging member 203 from each other.

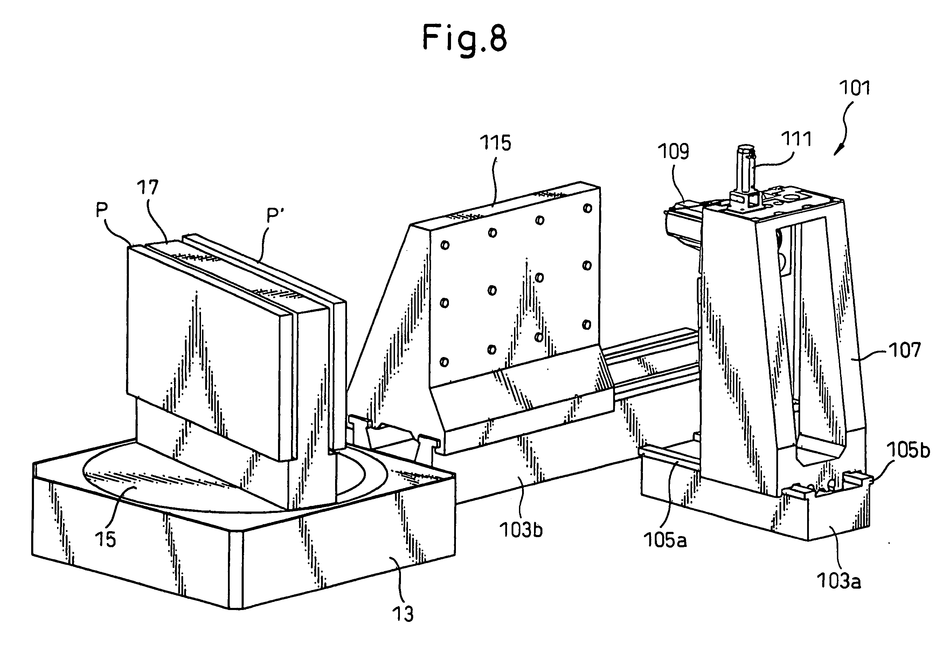

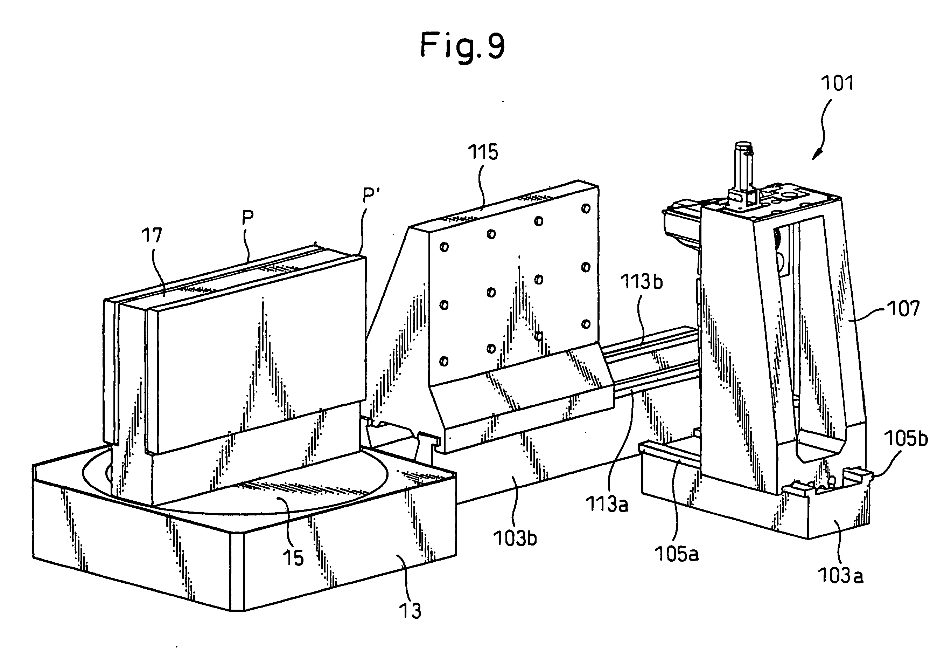

Then, the swivel base 15 rotates (see Fig. 8), and the pallet support member 17 is positioned such that the pallet mounting surface 17b having the new pallet P' mounted thereon is arranged in the X-Y plane (see Fig. 9). Next, the new pallet P' mounted on the pallet mounting surface 17b of the pallet support member 17 is unclamped by the same unclamp operation as that of the table 115 described above, and the movable base member 23 begins to move toward the table 115 in the X-axis direction. As soon as or after the movable base member 23 begins to move, the drive motor 27 rotates counterclockwise in Fig. 6, and the driven chain 37 rotates in the direction opposite to the arrow R. As a result, the new pallet P' begins to move in the opposite direction along the moving path of the old pallet P from the pallet mounting surface 117a of the table 115 toward the pallet mounting surface 17a of the pallet support member 17.

In this way, the new pallet P' moves from the pallet mounting surface 17b of the pallet support member 17 to the pallet mounting surface 117a of the table 115. In the process, the first horizontal guide roller 137a comes into contact with the first guide surface 206, and the second horizontal guide rollers 140, 147 come into contact with the second guide surfaces 204. At the same time, the lift rollers 127 come into contact with the lower end surface of the upper guide rail 205a of the second guide rail pair. As the result of each guide rail coming into contact with the rollers, the new pallet P' is guided in the X-axis direction along the pallet mounting surface 117a (see Fig. 5).

When the movable base member 23 arrives at a predetermined position in the X-axis direction and the drive motor 25 rotates by a predetermined angle so that the new pallet P' arrives at a position where the fitting portion 221 serving as an X-direction positioning means can engage the engaging protrusion 148, the movable base member 23 moves away from the new pallet P' in the Z-axis direction and returns onto the pallet support member 17 of the pallet changer 11. At the same time, the table 115 starts the clamp operation. Specifically, the working fluid stops being supplied to the lift cylinder 131, and the piston rod 131a is retreated, with the result that the link members 123 rotate counterclockwise about the rotary shaft 125 from the lift position shown in Fig. 2 to the support position, so that the lift rollers 127 move down with the new pallet P'. When the vertical bearing surfaces 219 of the vertical bearing members 217 come into contact with the vertical support surfaces 151 of the vertical support members 149, the lift rollers 127 come away from the lower end surface of the first guide rail 205a, so that the new pallet P' is supported vertically by the vertical support members 149 and accurately positioned in the Y-axis direction.

Then, the pressure fluid is not supplied to the unclamp cylinder (not shown), and the movable clamp members 137 move toward the pallet mounting surface 117a of the table 115 in the Z-axis direction as the result of the pressure fluid being supplied to the clamp cylinder (not shown). Thus, the first horizontal bearing members 209 are pressed by the movable clamp members 137, and the fitting portion 221 and the engaging protrusion 148 engage each other. The pallet P' is thus accurately positioned in the X-axis direction. At the same time, the first horizontal bearing members 209 are clamped between the first horizontal support members 133 and the movable clamp members 137, while each of second horizontal bearing members 213 is clamped between the second horizontal support member 139 and the stationary clamp member 143. Thus, the new pallet P' is supported horizontally by the first and second horizontal support members 133, 139, while at the same time being accurately positioned in the Z-axis direction. The clamp springs 133a are provided for preventing the pallet P' from being released from the table 115 in case of a power failure or an emergency stop.

As long as or after the new pallet P' is clamped to the table 115, the pallet support member 17 rotates 180 degrees and moves the old pallet P to the position designated by P' in Fig. 6 in preparation for the operation of replacing the machined workpiece mounted on the old pallet P with the workpiece yet to be machined. At this position, the operator can perform the mounting and demounting operation, of the workpiece, on the old pallet P.

## Claims

1. A pallet changer (11) for changing a pallet (P, P') of a machine tool (101), said machine tool (101) comprising a spindle supported so as to be rotatable about a horizontal axis for mounting a tool (T) at the forward end thereof, and a table (115) or a pallet mount facing the front of said spindle for mounting a pallet (P, P') on a vertical surface perpendicular to the axis of said spindle, said machine tool (101) machining a work-piece fixed on said pallet (P, P') with said tool (T) by moving said tool (T) and said table (115) relative to each other, said pallet changer (11) is **characterized in that** it comprises:
a pallet support member (17) disposed adjacent to said table (115) or said pallet mount and adapted to be rotationally indexed about a vertical axis, said pallet support member (17) having at least two vertical pallet mounting surfaces on each of which said pallet (P, P') can be removably mounted; and
a pallet moving means (23) for moving and transferring said pallet (P, P'), which is maintained in a vertical position, in X-axis direction between said table (115) or said pallet mount and said pallet support member (17).

2. The pallet changer (11) according to claim 1, wherein said pallet support member (17) is arranged in the extension of said table (115) or said pallet mount in the horizontal direction perpendicular to the spindle axis, sand wherein said pallet mounting surface, on the side of said pallet support member (17) where said pallet (P, P') moves, is arranged in parallel to said pallet mounting surface of said table (115) or said pallet mount.

## Patentansprüche

1. Palettenwechsler (11) zum Wechseln einer Palette (P, P') eines Maschinenwerkzeugs (101), worin das Maschinenwerkzeug (101) umfasst, eine Spindel, die so gelagert ist, dass sie um eine horizontale Achse drehbar ist, um ein Werkzeug (T) an ihrem vorderen Ende zu befestigen, und einen Tisch (115) oder eine Palettenbefestigung, der/die der Vorderseite der Spindel gegenüber liegt, zum Befestigen einer Palette (P, P') auf einer vertikalen Oberfläche rechtwinklig zu der Achse der Spindel, worin das Maschinenwerkzeug (101) ein auf der Palette (P, P') befestigtes Arbeitsstück mit dem Werkzeug (T) durch Bewegen des Werkzeugs (T) und des Tisches (115) relativ zueinander bearbeitet, und worin der Palettenwechsler (11) **dadurch gekennzeichnet ist, dass** er umfasst:
Ein Palettenstützelement (17), das benachbart zu dem Tisch (115) oder der Palettenbefestigung angeordnet ist und angepasst ist, um drehbar in eine vertikale Achse indexiert zu werden, worin das Palettenstützelement (17) mindestens zwei vertikale Oberflächen zum Befestigen von Paletten aufweist, auf jede von denen die Palette (P, P') abnehmbar befestigt werden kann; und
ein Palettenbewegungsmittel (23) zum Bewegen und Überführen der Palette (P, P'), die in einer vertikalen Position gehalten wird, zwischen dem Tisch (115) oder der Palettenbefestigung und dem Palettenstützelement (17) in X-Achsen Richtung.

2. Palettenwechsler (11) nach Anspruch 1, worin das Palettenstützelement (17) in der Verlängerung des Tisches (115) oder der Palettenbefestigung in horizontaler Richtung rechtwinklig zu der Spindelachse angeordnet ist, und worin die Oberfläche zum Befestigen von Paletten, auf der Seite des Palettenstützelements (17), an der die Palette (P, P') bewegt wird, parallel zu der Oberfläche zum Befestigen von Paletten des Tisches (115) oder der Palettenbefestigung angeordnet ist.

## Revendications

1. Dispositif de changement de palette (11) pour changer une palette (P, P') d'une machine-outil, ladite machine-outil (101) comprenant un arbre supporté de manière à pouvoir tourner par rapport à un axe horizontal pour monter un outil (T) au niveau de son extrémité avant, et une table (115) ou un bâti de palette faisant face à l'avant dudit arbre pour monter une palette (P, P') sur une surface verticale perpendiculaire à l'axe dudit arbre, ladite machine-outil (101) usinant un objet fixé sur ladite palette (P, P') avec ledit outil (T) en déplaçant ledit outil (T) et ladite table (115) l'un par rapport à l'autre, ledit dispositif de changement de palette (11) étant **caractérisé en ce qu'**il comprend :
un organe de support de palette (17) disposé à proximité de ladite table (115) ou dudit bâti de palette et adapté pour être indexé en rotation autour d'un axe vertical, ledit organe de support de palette (17) ayant au moins deux surfaces de montage de palette sur chacune desquelles ladite palette (P, P') peut être montée de manière démontable ; et
des moyens de déplacement d'une palette (23) pour déplacer et transférer ladite palette (P, P'), laquelle est maintenue dans une position verticale, dans une direction suivant l'axe X entre ladite table (115) ou ledit bâti de palette et ledit organe de support de palette (17).

2. Dispositif de changement de palette (11) selon la revendication 1, dans lequel ledit organe de support de palette (17) est agencé dans une rallonge de ladite table (115) ou dudit bâti de palette dans une direction horizontale perpendiculaire à l'axe de l'arbre, et dans lequel ladite surface de montage de palette, sur le côté dudit organe de support de palette (17) ou ladite palette (P, P') se déplace, est agencée en parallèle avec ladite surface de montage de palette de ladite table (115) ou dudit bâti de palette.
